# FASCICULE DE BREVET EUROPEEN

(11) **EP 1 533 545 B1**
(45) Date de publication et mention de la délivrance du brevet: **01.08.2007**
(21) Numéro de dépôt: 04300796.2
(22) Date de dépôt: 16.11.2004
(51) Int. Cl.: F16H 57/02

(54) **Transmission de boîte de vitesses automatique**
Automatisches Getriebe
Automatic transmission gearbox

(30) Priorité: 18.11.2003 FR 0313478
(43) Date de publication de la demande: 25.05.2005
(73) Titulaire: Peugeot Citroen Automobiles, 78140 Velizy-Villacoublay (FR)
(72) Inventeur: Hulin, René, 92500 Rueil Malmaison (FR)
(74) Mandataire: De Cuenca, Emmanuel Jaime

(56) Documents cités:
- EP-A- 0 710 786
- EP-A- 0 846 896
- WO-A-02/073070
- FR-A- 2 772 451

## Description

La présente invention a pour objet un carter principal de boîte de vitesses automatique ainsi que la fixation et le guidage en rotation d'un arbre de renvoi de boîte de vitesses automatique de véhicule automobile.

Il est connu que, dans les boîtes de vitesses automatiques, comme le décrit notamment le document FR2403227, le carter principal soit nécessairement composé d'au moins deux parties pour permettre le montage de la liaison avec le moteur thermique, qui est généralement un convertisseur de couple, ainsi que le montage des différents composants du mécanisme de boîte de vitesses automatique. En effet, une première partie du carter principal, référencée 1 sur la figure 2 du document FR2403227, comporte un convertisseur de couple et une seconde partie référencée 2 sur la figure 2 du document FR2403227 comporte entre autre un arbre de renvoi 34 et un mécanisme de boîte de vitesses automatique constitué notamment d'un arbre de sortie 29. Une fois le montage des différents composants réalisé, les deux parties sont assemblées suivant un plan de joint délimité par les faces parallèles référencées 1c et 2a dans le document FR2403227. Cette configuration a pour inconvénient d'affecter la rigidité et l'étanchéité du carter principal.

De plus, il est également connu que la seconde partie u carter, référencée 2 sur la figure 2 du document FR2403227 comporte des aménagements de telle sorte que l'arbre de renvoi est porté et guidé en rotation par des roulements à chacune de ses extrémités et que lesdits roulements sont respectivement montés dans un premier et un second logement-support, qui sont venue de matière de la seconde partie du carter principal de boîte de vitesses.

Il en résulte que cette configuration induit des formes complexes pour le carter principal de boîte de vitesses ainsi que des opérations d'usinage et de traitement de surface supplémentaires, notamment pour lesdits logements-supports.

En conclusion, les carters en deux parties, qui comportent en outre des aménagements pour porter et guider en rotation des arbres de boîtes de vitesses, nécessitent par conséquent des étapes de fabrication supplémentaires qui induisent des coûts de fabrication non négligeables et qui affectent leur rigidité et leur étanchéité.

Il est connu notamment du document FR 2 772 451, une transmission de boîte de vitesses comprenant au moins une liaison avec un moteur thermique, ladite liaison étant contenue dans un carter principal en deux ou une partie. Ce document représente l'état de technique le plus proche.

Afin de remédier à ces inconvénients, la présente invention a pour but de simplifier la conception des carters principaux de boîte de vitesses automatiques et de faciliter le montage des mécanismes de boîte de vitesses automatique et des arbres de renvoi.

Le but de l'invention est plus précisément atteint avec une transmission de boîte de vitesses automatique conforme à la revendication 1.

Le palier est fixé au carter principal suivant deux directions perpendiculaires, une direction axiale parallèle à l'axe du mécanisme de boîte de vitesses automatique et une direction radiale, perpendiculaire à celle-ci.

Le carter principal comporte une cloison pour la fixation axiale du palier.

Le carter principal comporte au moins deux ouvertures opposées, la première pour l'introduction du convertisseur de couple et la seconde pour l'introduction successivement du module de renvoi de mouvement et de l'axe du mécanisme de boîte de vitesses automatique.

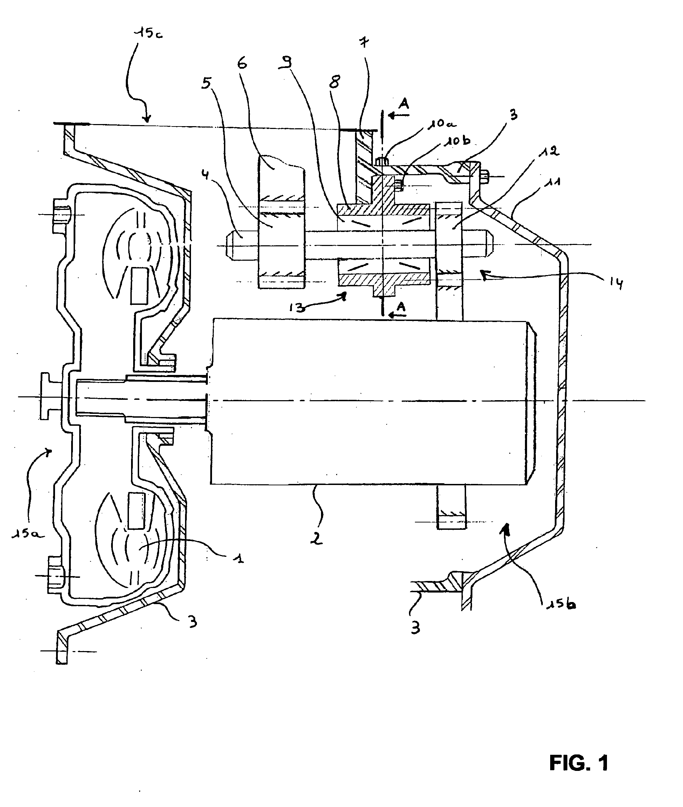

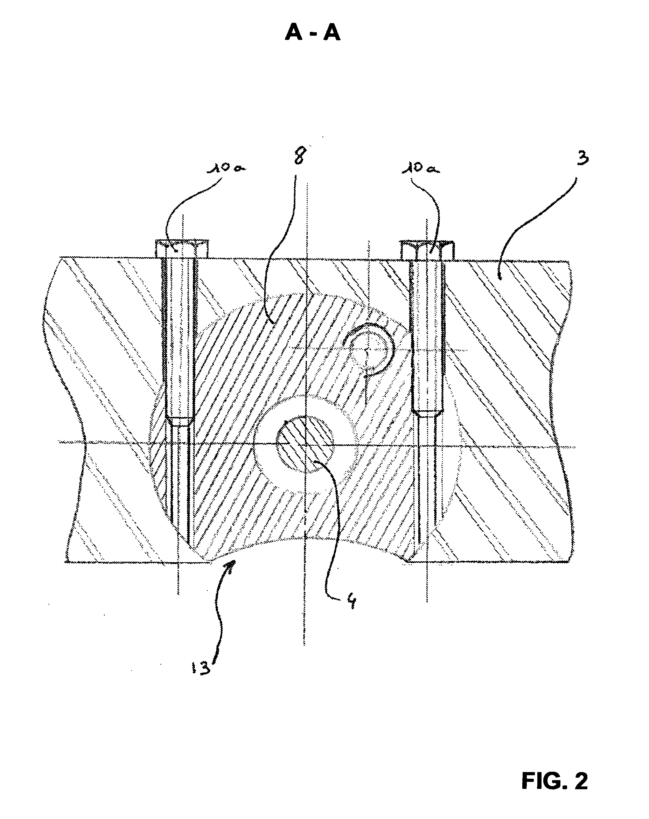

L'invention sera mieux comprise à l'étude d'un mode de réalisation particulier décrit à titre nullement limitatif et illustré par les figures 1 et 2. Sur les deux figures, les éléments correspondants portent les mêmes repères.

La figure 1 représente schématiquement en une coupe axiale une boîte de vitesses automatique selon un mode de réalisation de l'invention.

La figure 2 est une vue partielle de la figure 1, en coupe, suivant l'axe A-A.

Tel que représenté sur la figure 1, une boîte de vitesses automatique comprend, dans un carter principal 3, un convertisseur de couple 1 relié de façon classique à un moteur thermique non représenté et animant un axe de mécanisme de boîte de vitesses automatique 2, qui à son tour transmet son mouvement de rotation à un module de renvoi de mouvement 14.

Le module de renvoi de mouvement 14 comporte au moins un palier 13, un arbre de renvoi 4, un pignon moteur de couronne de pont 5 engrenant sur une couronne 6, un pignon récepteur de renvoi 12 qui est engrené par l'axe du mécanisme de boîte de vitesses automatique 2.

Tel que représenté également sur la figure 1 et conformément au but de l'invention, l'arbre de renvoi 4 est uniquement porté et guidé en rotation par le palier 13.

Le palier 13 est constitué d'un élément support 8 qui est fixé au carter principal 3, et de roulements à rouleaux coniques 9, qui assurent le guidage en rotation de l'arbre de renvoi 4.

Le support 8 est fixé au carter principal 3 suivant deux directions perpendiculaires, une direction axiale parallèle à l'axe du mécanisme de boîte de vitesses automatique 2 et une direction radiale, perpendiculaire à celle-ci.

Plus précisément, le support 8 est fixé, suivant une direction axiale parallèle à l'axe de mécanisme de boîte de vitesses automatique 2 par une vis 10b, à une cloison 7 qui est réalisée venue de matière avec le carter principal 3.

De même, le support 8 est fixé au carter principal 3, suivant une direction radiale perpendiculaire à celle de l'axe du mécanisme de boîte de vitesses automatique 2, par deux vis 10a.

Le carter comporte au moins deux ouvertures opposées 15a et 15b de manière à introduire par l'ouverture 15a, le convertisseur de couple 1 et par l'ouverture 15b, l'axe du mécanisme de boîte de vitesses automatique 2 ainsi que le module de renvoi de mouvement 14.

Le module de renvoi de mouvement 14, qui comporte au moins un palier 13, un arbre de renvoi 4, un pignon moteur de couronne de pont 5 et un pignon récepteur de renvoi 12, constitue un ensemble pré-monté, qui est fixé d'un seul bloc au carter principal 3 au moyen des vis 10a et 10b.

Le montage de l'axe du mécanisme de boîte de vitesses automatique 2 et du module de renvoi de mouvement 14 s'effectue dans un ordre indifférent.

De façon classique et connue, l'ouverture 15b est ensuite fermée par un couvercle 11.

De façon classique et connue, le carter principal 3 comporte aussi une ouverture supplémentaire 15c de manière à introduire la couronne de pont 6.

Ainsi, le carter principal 3 en une seule partie présente comme avantages d'être plus simple à réaliser et de faciliter le montage du convertisseur de couple 1, du mécanisme de boîte de vitesses automatique 2 et de l'arbre de renvoi 4.

De plus, la fixation du support 8 suivant lesdites directions axiale et radiale permet une rigidité très acceptable de l'ensemble carter principal 3 et module de renvoi de mouvement 14.

Suivant un autre mode de réalisation, la fixation du support 8, suivant une direction axiale parallèle à l'axe de mécanisme de boîte de vitesses automatique 2 par une vis 10b à la cloison 7, peut être supprimée.

De même, les roulements 9 pourraient ne pas être des roulements à rouleaux coniques.

## Revendications

1. Transmission de boîte de vitesses automatique comprenant au moins une liaison avec un moteur thermique, telle qu'un convertisseur de couple (1), reliée à un axe de mécanisme de boîte de vitesses automatique (2), lui même relié à un module de renvoi de mouvement (14), ladite liaison étant contenue dans un carter principal (3) qui est en une seule partie, **caractérisée en ce que** le module de renvoi de mouvement (14) est porté et guidé uniquement par l'intermédiaire d'un palier (13) au carter principal (3), ledit palier (13) étant fixé au carter principal (3) suivant une direction axiale parallèle à l'axe du mécanisme de boîte de vitesses automatique (2).

2. Transmission de boîte de vitesses automatique selon la revendication 1, **caractérisée en ce que** le palier (13) est fixé au carter principal (3) suivant une direction radiale perpendiculaire à l'axe du mécanisme de boîte de vitesses automatique (2).

3. Transmission de boîte de vitesses automatique selon la revendication 1 ou 2, **caractérisée en ce que** le carter principal (3) comporte une cloison (7) pour la fixation axiale du palier (13).

4. Transmission de boîte de vitesses automatique selon l'une des revendications précédentes, **caractérisée en ce que** le carter principal (3) comporte au moins deux ouvertures opposées (15a) et (15b), la première pour l'introduction du convertisseur de couple (1) et la seconde pour l'introduction du module de renvoi de mouvement (14) et de l'axe du mécanisme de boîte de vitesses automatique (2).

## Claims

1. Automatic gear box transmission comprising at least one connection with a heat engine, such as a torque converter (1), connected to an automatic gear box mechanism rod (2), itself connected to a movement transmission module (14), said connection being contained in a crankcase (3) that is in a single part, **characterised in that** the movement transmission module (14) is carried and guided solely by one bearing (13) on the crankcase (3), said bearing (13) being fixed to the crankcase (3) in an axial direction parallel to the automatic gear box mechanism rod (2).

2. Automatic gear box transmission according to Claim 1, **characterised in that** the bearing (13) is fixed to the crankcase (3) in a radial direction perpendicular to the automatic gear box mechanism rod (2).

3. Automatic gear box transmission according to Claim 1 or 2, **characterised in that** the crankcase (3) comprises a partition (7) for the axial fixing of the bearing (13).

4. Automatic gear box transmission according to one of the preceding claims, **characterised in that** the crankcase (3) comprises at least two opposite openings (15a) and (15b), the first for the introduction of the torque converter (1) and the second for the introduction of the movement transmission module (14) and the automatic gear box mechanism rod (2).

## Patentansprüche

1. Automatikgetriebe mit mindestens einer Verbindung mit einem Verbrennungsmotor, die beispielsweise ein Drehmomentwandler (1) sein kann und mit einer Achse des Mechanismus (2) des Automatikgetriebes verbunden ist, welche wiederum mit einem Modul zur Bewegungstransmission (14) verbunden ist, wobei die Verbindung in einem einteiligen Hauptgehäuse (3) enthalten ist, **dadurch gekennzeichnet, dass** das Modul zur Bewegungstransmission (14) nur mittels eines Lagers (13) im Hauptgehäuse (3) getragen und geführt wird, wobei das Lager (13) in einer axialen Richtung parallel zur Achse des Mechanismus (2) des Automatikgetriebes am Hauptgehäuse (3) befestigt ist.

2. Automatikgetriebe nach Anspruch 1, **dadurch gekennzeichnet, dass** das Lager (13) in einer radialen Richtung senkrecht zur Achse des Mechanismus (2) des Automatikgetriebes am Hauptgehäuse (3) befestigt ist.

3. Automatikgetriebe nach Anspruch 1 oder 2, **dadurch gekennzeichnet, dass** das Hauptgehäuse (3) eine Wand (7) zur axialen Befestigung des Lagers (13) aufweist.

4. Automatikgetriebe nach einem der vorhergehenden Ansprüche, **dadurch gekennzeichnet, dass** das Hauptgehäuse (3) mindestens zwei gegenüberliegende Öffnungen (15a) und (15b) aufweist, von denen die erste zum Einführen des Drehmomentwandlers (1) und die zweite zum Einführen des Moduls zur Bewegungstransmission (14) und der Achse des Mechanismus (2) des Automatikgetriebes dient.
